# EUROPÄISCHE PATENTSCHRIFT

(11) **EP 2 544 791 B1**
(45) Veröffentlichungstag und Bekanntmachung des Hinweises auf die Patenterteilung: **01.11.2017**
(21) Anmeldenummer: 11707422.9
(22) Anmeldetag: 10.03.2011
(51) Int. Cl.: B01D 39/16, B01D 39/18, B01D 39/20

(54) **FILTERMEDIUM EINES FILTERELEMENTS UND EIN FILTERELEMENT**
FILTER MEDIUM OF A FILTER ELEMENT AND A FILTER ELEMENT
MATÉRIAU FILTRANT D'UN ÉLÉMENT FILTRANT ET UN ÉLÉMENT FILTRANT

(30) Priorität: 15.03.2010 DE 102010011512; 12.03.2010 DE 102010011396
(43) Veröffentlichungstag der Anmeldung: 16.01.2013
(73) Patentinhaber: Mann + Hummel GmbH, 71638 Ludwigsburg (DE)
(72) Erfinder: NEUBAUER, Sebastian, 25436 Tornesch (DE); REYINGER, Jochen, 71336 Waiblingen (DE); WYHLER, Heiko, 70378 Stuttgart (DE)
(74) Vertreter: Kohler Schmid Möbus Patentanwälte
(86) Internationale Anmeldenummer: PCT/EP2011/053635
(87) Internationale Veröffentlichungsnummer: WO 2011/110637

(56) Entgegenhaltungen:
- EP-A1- 1 366 791
- EP-A2- 0 053 879
- WO-A1-99/26710
- WO-A1-03/020401
- DE-A1- 19 618 758
- DE-T5-112006 001 428
- US-A1- 2003 106 293
- US-B1- 6 169 045
- US-B1- 6 387 141

## Beschreibung

### Technisches Gebiet

Die Erfindung betrifft ein Filtermedium eines Filterelements zur Filtrierung eines Fluides, insbesondere eines flüssigen Kraftstoffs, Wasser, Motoröl oder Luft, insbesondere einer Brennkraftmaschine eines Kraftfahrzeugs, mit wenigstens einer nichtgewebten Filterlage aus synthetischen Einzelfasern, wobei das Filtermedium einen in Durchströmungsrichtung zunehmenden Abscheidegrad für die auszufilternden Partikel aufweist.

Ferner betrifft die Erfindung ein Filterelement zur Filtrierung eines Fluides, insbesondere eines flüssigen Kraftstoffs, Wasser, Motoröl oder Luft, insbesondere einer Brennkraftmaschine eines Kraftfahrzeugs, mit einem Filtermedium mit wenigstens einer nichtgewebten Filterlage aus synthetischen Einzelfasern, das einen in Durchströmungsrichtung zunehmenden Abscheidegrad für die auszufilternden Partikel aufweist.

### Stand der Technik

Aus der WO 99/26710 ist ein Filterelement bekannt, bei dem in Durchströmungsrichtung mehrere Lagen eines Filtermediums aneinander gefügt sind. Zur Verbesserung der gesamten Partikelaufnahmekapazität bei gegebener Filterfeinheit oder zur Erhöhung der Filterfeinheit bei gegebener Partikelaufnahmekapazität nimmt die Filterfeinheit in Durchströmungsrichtung von Einzellage zu Einzellage zu. Bei einer Verblockung der abgeschiedenen Partikel an der Oberfläche einer der Einzellagen übersteigt ein Differenzdruck zwischen der Anströmseite und der Abströmseite des Filtermediums einen maximal zulässigen Wert, so dass das Filtermedium ausgetauscht werden muss. Aus der US 2003/0106293 A1 ist Filtermedium eines Filterelementes zur Filtrierung eines Fluids mit einer nichtgewebten Filterlage aus synthetischen Einzelfasern bekannt. Die DE 112006001428 zeigt Flüssigkeitsfiltrationssysteme und betrifft insbesondere ein Gradientendichte-Tiefenfiltrationssystem, das mit verschiedenen Kraftstoffen, Kühlmitteln und anderen flüssigen und gasförmigen Fluiden verträglich ist.

Der Erfindung liegt die Aufgabe zugrunde, ein stabileres Filtermedium und ein daraus erstelltes Filterelement bereit zu stellen.

### Offenbarung der Erfindung

Diese Aufgabe wird erfindungsgemäß durch die Lehre der Ansprüche 1 bis 9 gelöst. Die Komprimiertheit entspricht der Porosität eines Filtermaterials, welches sich durch das Verhältnis von Hohlraumvolumen zu Gesamtvolumen einer zu untersuchenden Volumeneinheit eines Filtermaterials bestimmt, d. h. die Porosität nimmt Werte zwischen 0 und 1 an. Erfindungsgemäß weist die Filterlage eine in Durchströmungsrichtung abnehmende Porosität auf. Zur Bestimmung der Porosität bzw. Komprimiertheit kann beispielsweise die Filterlage im Querschnitt mittels eines Rasterefeictronenmikroskops aufgenommen werden. Durch Binärisierung des Aufnahmebildes in schwarze Bereiche (Faser grenzt unmittelbar an Schnittebene) und weiße Bereiche (kein unmittelbar angrenzende Faser) und anschließende Auswertung des Verhältnisses der schwarzen und weißen Bildflächenanteile kann die Komprimiertheit bzw. Porosität in entlang der Durchströmungsrichtung aufeinanderfolgenden Abschnitte der Filterlage bestimmt werden.

Erfindungsgemäß wird eine tiefenabhängige Gradientenstruktur der Komprimiertheit der einen Filterlage realisiert, so dass in einer einzigen Lage in Durchströmungsrichtung ein kontinuierlicher Übergang von einem Grobflterbereich (niedrige Komprimiertheit, hohe Porosität) in einen Feinfilterbereich (hohe Komprimiertheit, niedrige Porosität) erreicht wird. Zu diesem Zweck nimmt die Komprimiertheit der Filterlage in Durchströmungsrichtung vorteilhafterweise stetig zu. Mit ein und demselben Filtermaterial kann erfindungsgemäß in der einen Lage ein in Durchströmungsrichtung zunehmender Abscheidegrad für die auszufilternden Partikel erzielt werden.

Der Abscheidegrad gibt den Anteil der Partikel an, die bei einer Filtration an dem Filtermedium abgeschieden werden. Der Abscheidegrad ist insbesondere auch von der Partikelgrößen-Verteilung im zu filtrierenden Fluid abhängig. Daher ist die Bestimmung des Abscheidegrades, auch Filtereffekfivität, Trenngrad oder Filterfeinheit genannt, in Abhängigkeit des Einsatzes des Filtermediums durch internationale Normschriften festgelegt (z. B. ISO 4020 sowie ISO 19438 zu Kraftstofffiltern, ISO 5011 zu Luftfiltern). Bei der normierten Bestimmung des Abscheidegrades wird dieser für ein Filtermedium insgesamt bestimmt, und nicht für einzelne Zwischenschichten des Filtermediums bzw. für eine einzelne Filterlage eines Verbundes von Filterlagen. Im Falle der Erfindung weist das Filtermedium bzw. die Filterlage insofern einen in Durchströmungsrichtung zunehmenden fiktiven Abscheidegrad auf. Der fiktive Abscheidegrad stellt den Abscheidegrad einer Zwischenschicht der Filterlage dar, der sich ergibt, wenn ein Filtermedium mit der Beschaffenheit dieser Zwischenschicht, aber mit einer bestimmten einheitlichen Schichtdicke von z. B 1 mm, isoliert untersucht wird.

Dank der Erfindung steht das gesamte Volumen der Filterlage für eine Tiefenfiltration zur Verfügung. Die Partikelaufnahmekapazität der Filterlage wird also nicht durch die Aufnahmekapazität an der Oberfläche begrenzt, sondern wird durch die Aufnahmekapazität des gesamten Volumens der Filterlage bestimmt. Der Differenzdruck zwischen Anströmseite und Abströmseite der Filterlage erhöht sich erst bei einer deutlich größeren Partikelbeladung als bei aus dem Stand der Technik bekannten Filtermedien, bei denen die Partikelaufnahmekapazität durch die Oberflächenfiltration begrenzt wird. Es werden deutlich höhere Partikelaufnahmekapazitäten und längere Standzeiten als bei aus dem Stand der Technik bekannten Filtermedien realisiert.

Bei einer vorteilhaften Ausführungsform kann wenigstens eine Filterlage, insbesondere diejenige Filterlage, deren Komprimiertheit in Durchströmungsrichtung zunimmt, aus einem Meltblown-Vlies bestehen. Meltblown-Vliese bestehen aus Einzelfasern bzw. vielen Endlosfasern, die verhältnismäßig geringe Faserdurchmesser haben, so dass eine verhältnismäßig große Porosität des Meltblown-Vliesmaterials erreicht wird. Meltblown-Vliese haben sehr hohe Speicherkapazitäten für die auszufilternden Partikel bei einem geringen Durchströmungswiderstand für das zu filtrierende Fluid. Meltblown-Vliese können einfach tiefenabhängig komprimiert werden. Üblicherweise werden Meltblown-Vliese in einem Meltblown-Verfahren bzw. Schmelzblasverfahren hergestellt, bei welchem Endlosfasern aus geschmolzenem Kunststoff unmittelbar nach dem Austreten aus einer Düse mittels Luft verwirbelt und auf einer Ablagefläche, z. B. einer Fördereinrichtung, abgelegt werden, so dass sich ein nichtgewebtes Vlies ausbildet.

Vorteilhafterweise kann die Filterlage aus einer einzigen Schicht aus einer Mischung von Einzelfasem mit unterschiedlichen Durchmessern und/oder Längen bestehen, deren Komprimiertheit in Durchströmungsrichtung kontinuierlich zunimmt. Dies hat den Vorteil, dass die Filterlage einfach in einem Arbeitsgang hergestellt werden kann. Es ist kein aufwändiger Schichtprozess erforderlich, bei dem Einzelfasern mit unterschiedlichen Durchmessern und/oder Längen kontrolliert übereinander geschichtet werden müssen.

Vorzugsweise ist die Faserdurchmesser-Verteilung der der Filterlage, deren Komprimiertheit in Durchströmungsrichtung zunimmt, wenigstens in Durchströmungsrichtung zumindest weitgehend konstant. Die Faserdurchmesser-Verteilung kann z. B. nach dem in der DE 10 2009 043 273 A1 beschriebenen Verfahren ermittelt werden.

Vorteilhafterweise kann die Filterlage aus einer Mischung aus Einzelfasern mit Durchmessern zwischen etwa 50 nm und etwa 8 µm, insbesondere mit einem mittleren Durchmesser von etwa 1 µm bis etwa 2 µm, bestehen. Als mittlerer Durchmesser ist der arithmetische Mittelwert bezeichnet, welcher z. B. ebenfalls mit Hilfe des durch die DE 10 2009 043 273 A1 beschriebenen Verfahrens bestimmbar ist. Derartige Fasergrößen ermöglichen ein optimales Verhältnis von Durchströmungswiderstand und Filterwirkung. So können optimal kleine Differenzdrücke zwischen der Anströmseite des Filtermediums und der Abströmseite erzielt werden.

Bei einem besonders bevorzugten Ausführungsbeispiel der Erfindung besteht die Filterlage, deren Komprimiertheit in Durchströmungsrichtung zunimmt, aus Endlosfasern bzw. sogenannten Filamenten.

Durch einen einfachen Herstellungsprozess zeichnet sich eine Erfindungsvariante aus, bei welcher die Filterlage, deren Komprimiertheit in Durchströmungsrichtung zunimmt, aus materialeinheitlichen besteht.

In der Praxis bewährt haben sich Ausführungsformen, bei welchen die Einzelfasern der Filterlage, deren Komprimiertheit in Durchströmungsrichtung zunimmt, aus Polyamid, Polyester, insbesondere Polybutylenterephthalat, oder Polypropylen bestehen.

Die wenigstens eine Filterlage ist flächig an eine zweite zelluloseheltige und/oder glasfaserhaltige Lage angefügt. Vorteilhafterweise sind die beiden Lagen bezüglich ihres Abscheidegrads so aneinander angepasst, dass beide Lagen etwa gleichzeitig an ihre Kapazitätsgrenze in Bezug auf die Pefikelbeladung kommen. Keine der beiden Einzellagen begrenzt so alleine die Partikelaufnahmekapazität des Filtermediums. Die Volumina beider Lagen werden optimal und vollständig zur Filtration genutzt. Dies verbessert die Filterwirkung und erhöht die Standzeit des Filtermediums. Es kann ein optimales Verhältnis der Partikelaufnahmekapazität zum Gesamtvolumen des Filtermediums erreicht werden. Dadurch kann bei gleichen Leistungsdaten ein Filter mit einem deutlich geringeren Bauraum beziehungsweise bei gegebenem Bauraum eine Leistungssteigerung des Filters realisiert werden.

Die wenigstens eine Filterlage ist anströmseitig und die zweite Lage abströmseitig angeordnet. Als zweite Lage kann so ein dichteres, mechanisch stabileres Medium als für die erste Filterlage verwendet werden. Die zweite Lage kann so als Feinfilter wirken und eine Trägerfunktion erfüllen. Bei der anströmseitigen Filterlage muss nicht auf deren Formstabilität geachtet werden. Die anströmseitige Filterlage kann optimal locker und durchlässig ausgestaltet sein, was die Tiefenfiltration deutlich verbessert. Die zweite Lage kann ebenfalls eine in Durchströmungsrichtung zunehmende Komprimiertheit aufweisen oder eine in Durchströmungsrichtung konstante Komprimiertheit haben.

Ferner wird die Aufgabe bei dem Filterelement erfindungsgemäß dadurch gelöst, dass die Filterlage eine in Durchströmungsrichtung zunehmende Komprimiertheit aufweist. Die oben erläuterten Vorteile des erfindungsgemäßen Filter mediums gelten für das erfindungsgemäße Filterelement entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figur 1: schematisch ein Filterelement mit einem zickzackförmig gefalteten Filtermedium;
- Figur 2: schematisch einen Schnitt des zweilagigen Filtermediums des Filterelements aus der Figur 1, bei dem eine Meltblownlage an eine Zelluloselage angefügt ist, wobei die Meltblownlage eine in Durchströmungsrichtung zunehmende Komprimiertheit aufweist;
- Figur 3: schematisch ein Ablageband, zur Herstellung der Meltblownlage des Filtermediums aus den Figuren 1 und 2.

### Ausführungsform(en) der Erfindung

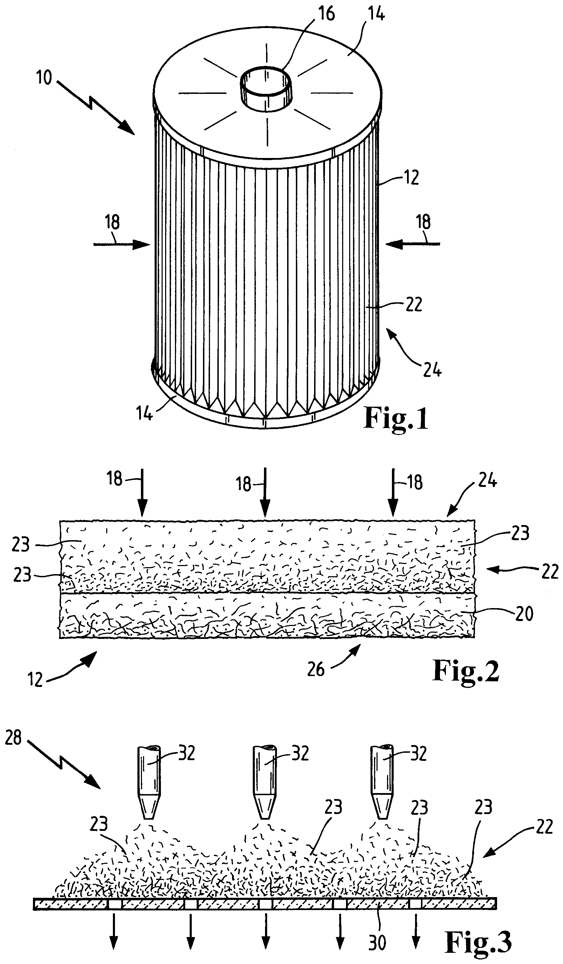

In der Figur 1 ist ein Filterelement 10 eines ansonsten nicht gezeigten Kraftstofffilters für Dieselkraftstoff einer Brennkraftmaschine eines Kraftfahrzeugs dargestellt.

Das Filterelement 10 umfasst ein zweilagiges Filtermedium 12, welches zickzackförmig gefaltet und zu einem Zylinder geformt ist. An den Stirnseiten des zylindrisch geformten Filtermediums 12 ist jeweils eine Endscheibe 14 befestigt. Die in der Figur 1 obere Endscheibe 14 weist zentrisch einen Auslassstutzen 16 für den filtrierten Kraftstoff auf. Im Betrieb durchströmt der zu filtrierende Kraftstoff das Filtermedium 12 in Durchströmungsrichtung, in der Figur 1 angedeutet durch einen Pfeil 18, radial von außen nach innen. Die Reinseite befindet sich innerhalb des Filterelements 10, die Rohseite ist radial außerhalb des Filterelements 10.

Das Filtermedium 12 ist in der Figur 2 im Schnitt gezeigt. Es besteht aus einer Zelluloselage 20, in der Figur 2 unten, an die eine nichtgewebte Meltblownlage 22, in der Figur 2 oben, flächig angefügt ist. Die aus einem Meltblown-Vlies bestehende Meltblownlage 22 bildet bezüglich der Durchströmungsrichtung 18 eine Anströmseite 24 des Filtermediums 12 für den zu filtrierenden Kraftstoff. Sie ist also der Rohseite zugewandt. Die Zelluloselage 20 bildet eine Abströmseite 26 des Filtermediums 12 und ist der Reinseite zugewandt. Die Meltblownlage 22 ist vorzugsweise 0,4 bis 2 mm dick.

Die Meltblownlage 22 besteht aus einer einzigen Schicht aus einer Mischung von synthetischen 23 mit unterschiedlichen Durchmessern und Längen. Die Durchmesser variieren zwischen 50 nm und etwa 8 µm. Der mittlere Durchmesser der Faserverteilung liegt zwischen etwa 1 µm und etwa 2 µm. Die 23 sind materialeinheitlich und stellen Endlosfasern bzw. Filamente dar, die aus Polyamid, Polyester, insbesondere Polybutylenterephthalat, oder Polypropylen hergestellt sind. Die Faserdurchmesser-Verteilung der Einzelfasern 23 ist über die gesamte Meltblownlage 22 hinweg konstant.

Die Meltblownlage 22 weist eine in Durchströmungsrichtung 18 zunehmende Komprimiertheit auf. Die Einzelfasern 23 der Fasermischung sind in Durchströmungsrichtung 18 dichter gepackt. Auf diese Weise wird ein in Durchströmungsrichtung 18 zunehmender Abscheidegrad für die auszufilternden Partikel erreicht.

Im Betrieb wird das Filterelement 10 radial von außen nach innen von dem zu filtrierenden Kraftstoff durchströmt. Dadurch, dass die Komprimiertheit der Meltblownlage 22 in Durchströmungsrichtung 18 zunimmt, werden die im zu filtrierenden Kraftstoff enthaltenen Partikel durch Tiefenfiltration über das gesamte Volumen der Meltblownlage 22 abgeschieden. Eine vorzeitige Verblockung an der Oberfläche der Meltblownlage 22 wird so vermieden. Durch die gleichmäßige Beladung der Meltblownlage 22 mit Partikeln wird eine Erhöhung des Differenzdrucks zwischen der Anströmseite 24 und der Abströmseite 26 optimal heraus gezögert. Umfangreiche Messungen haben ergeben, dass sich die Gesamt-Partikelaufnahmekapazität gegenüber aus dem Stand der Technik bekannten, in Flächen und Dicken vergleichbaren Filtermedien um mehr als 100 % erhöht.

Die Zelluloselage 20 zeichnet sich ebenso wie die Meltblownlage 22 durch eine zunehmende Komprimiertheit in Durchströmrichtung 18 aus. Die Partikelaufnahmekapazität der Meltblownlage 22 und der Zelluloselage 20 sind so aufeinander abgestimmt, dass sie gleichzeitig in den Bereich der Sättigung kommen, wo die Oberflächenfiltration einsetzt. Die Volumen beider Einzellagen werden so jeweils vollständig zur Tiefenfiltration genutzt.

Zur Herstellung des Filterelements 10 wird zunächst die Meltblownlage 22 in Form eines Vlieses hergestellt.

In der Figur 3 ist eine Vorrichtung 28 zur Herstellung der Meltblownlage 22 gezeigt. Die Vorrichtung 28 umfasst eine Ablagefläche, welche von einem gitterartigen, im wesentlichen horizontal verlaufenden Ablageband 30 gebildet ist, welches in hier nicht weiter interessierender Weise untersaugt wird.

Die Mischung aus synthetischen Einzelfasern 23 wird in hier nicht weiter interessierender Weise flächig und übereinander auf dem Ablageband 30 abgelegt. Die Untersaugung des Ablagebands 30 bewirkt, dass die Einzelfasern 23 zum Ablageband 30 hin angesaugt werden. Dabei erfahren die näher am Ablageband 30 abgelegten 23 eine stärkere Ansaugkraft, als die weiter entfernt liegenden Einzelfasern 23. Die Schwerkraft bewirkt zusätzlich, dass die oben liegenden Einzelfasern 23 die weiter unten liegenden 23 gegen das Ablageband 30 pressen. Insgesamt bewirken die Schwerkraft und die Ansaugkraft, die beide mit der Tiefe der Meltblownlage 22 zunehmen, dass die Meltblownlage 22 zum Ablageband 30 hin eine kontinuierlich zunehmende Kompression erfährt.

Die Meltblownlage 22 wird anschließend an die Zelluloselage 20 angefügt, wobei die dem Ablageband 30 zugewandte, am stärksten komprimierte Seite der Meltblownlage 22 der Zelluloselage 20 zugewandt wird.

Das fertige Filtermedium 12 wird anschließend in hier nicht weiter interessierender Weise zickzackförmig gefaltet, zylindrisch geformt und umfänglich geschlossen. Die Endscheiben 14 werden an den Stirnseiten des gefalteten Filtermediums 12 angebracht.

Bei dem oben beschriebenen Ausführungsbeispiel eines Filterelements 10 und eines Filtermediums 12 sind unter anderem folgende Modifikationen möglich:

Die Erfindung ist nicht beschränkt auf die Verwendung bei Kraftstofffiltern, insbesondere Dieselfiltern. Vielmehr kann sie auch bei andersartigen Filtern, Filterelementen 10 beziehungsweise Filtermedien 12 zur Filtrierung von andersartigen Fluiden, beispielsweise einem andersartigen flüssigen Kraftstoff, Wasser, Motoröl oder Luft, verwendet werden. Sie kann statt bei Brennkraftmaschinen von Kraftfahrzeugen auch in anderen technischen Bereichen, beispielsweise bei Industriemotoren, Kompressoren oder in der Wassertechnik, eingesetzt werden.

Das Filtermedium 12 kann statt zickzackförmig gefaltet und zu einem geschlossenen Zylinder geformt auch in einer anderen Form realisiert werden. Beispielsweise kann das Filtermedium 12 auch eben oder gefaltet auch bei eckigen Filterelementen verwendet werden.

Das Filterelement 10 kann auch so ausgelegt sein, dass es radial von innen nach außen durchströmt wird, in diesem Fall ist die Meltblownlage 22 radial innen anzuordnen.

Die Meltblownlage 22 ist erfindungsgemäß aus einer Mischung aus Einzelfasern 23 mit Durchmessern von weniger als 50 nm oder mehr als 8 µm realisiert. Der mittlere Durchmesser der Einzelfasern 23 kann auch kleiner als 1 µm oder größer als 2 µm sein.

Anstatt der Zelluloselage 20 kann auch eine andersartige Lage, beispielsweise eine glasfaserhaltige Lage oder eine weitere Meltblownlage, vorgesehen sein, die vorzugsweise auch die Form des Filtermediums 12 vorgibt und/oder als Träger für die Meltblownlage 22 wirkt.

Das erfindungsgemäße Filtermedium 12 kann statt aus der Meltblownlage 22 und der Zelluloselage 20 auch aus mehr als einer Meltblownlage 22 und/oder mehr als einer Zelluloselage 20 bestehen.

Die Zelluloselage 20 kann statt einer Komprimiertheit, die in Durchströmungsrichtung 18 zunimmt, auch eine in Durchströmungsrichtung 18 konstante Komprimiertheit aufweisen. Sie kann auch als Feinstflterlage ausgestaltet sein.

## Patentansprüche

1. Filtermedium (12) eines Filterelements (10) zur Filtrierung eines Fluides, insbesondere eines flüssigen Kraftstoffs, Wasser, Motoröl oder Luft, insbesondere einer Brennkraftmaschine eines Kraftfahrzeugs, mit wenigstens einer nichtgewebten Filterlage (22) aus synthetischen Einzelfasern (23), wobei die Filterlage (22) entlang einer Durchströmungsrichtung (18) des Fluides durch die Filterlage (22) eine zunehmende Filterfeinheit für die auszufilternden Partikel aufweist, und wobei die Filterlage (22) eine entlang der Durchströmungsrichtung (18) abnehmende Porosität aufweist, **dadurch gekennzeichnet, dass** an die Filterlage (22), deren Porosität in der Durchströmungsrichtung (18) des Fluides durch die Filterlage (22) kontinuierlich abnimmt, abströmseitig flächig eine zweite zellulosehaltige und/oder glasfaserhaltige Lage angefügt ist, und dass die Filterlage (22), deren Porosität entlang der Durchströmungsrichtung (18) abnimmt, aus einer Mischung aus Einzelfasern (23) mit Durchmessern zwischen etwa 50 nm und etwa 8 µm, mit einem mittleren Durchmesser von etwa 1 µm bis etwa 2 µm, besteht.

2. Filtermedium nach Anspruch 1, **dadurch gekennzeichnet, dass** die Filterlage (22) eine entlang der Durchströmungsrichtung (18) stetig abnehmende Porosität aufweist.

3. Filtermedium nach einem der vorigen Ansprüche, **dadurch gekenntzelchnet, dass** wenigstens eine Filterlage (22) aus einem Meltblown-Vlies besteht.

4. Filtermedium nach einem der vorigen Ansprüche, **dadurch gekennzeichnet, dass** die Filterlage (22), deren Porosität entlang der Durchströmungsrichtung (18) abnimmt, aus einer einzigen Schicht aus einer Mischung von Einzelfasern (23) mit unterschiedlichen Durchmessern und/oder Längen besteht.

5. Filtermedium nach einem der vorigen Ansprüche, **dadurch gekennzeichnet, dass** die Faserdurchmesser-Verteilung der Einzelfasern (23) der Filterlage (22), deren Porosität entlang der Durchströmungsrichtung (18) abnimmt, wenigstens entlang der Durchströmungsrichtung (18) konstant ist.

6. Filtermedium nach einem der vorigen Ansprüche, **dadurch gekennzeichnet, dass** die Filterlage (22), deren Porosität entlang der Durchströmungsrichtung (18) abnimmt, aus Endlosfasern besteht.

7. Filtermedium nach einem der vorigen Ansprüche, **dadurch gekennzeichnet, dass** die Filterlage (22), deren Porosität entlang der Durchströmungsrichtung (18) abnimmt, materialeinheitlich ist.

8. Filtermedium nach einem der vorigen Ansprüche, **dadurch gekennzeichnet, dass** die der Filterlage (22), deren Porosität entlang der Durchströmungsrichtung (18) abnimmt, aus Polyamid, Polyester, insbesondere Polybutylenterephthalat, oder Polypropylen bestehen.

9. Filterelement (10) zur Fittrierung eines Fluides, insbesondere eines flüssigen Kraftstoffs, Wasser, Motoröl oder Luft, insbesondere einer Brennkraftmaschine eines Kraftfahrzeugs, mit einem Filtermedium (12) nach einem der vorigen Ansprüche, wobei das Filtermedium (12) zick-zack-förmig gefaltet, zylindrisch geformt und umfänglich geschlossen ist.

## Claims

1. Filter medium (12) of a filter element (10) for filtration of a fluid, in particular of a liquid fuel, water, engine/motor oil, or air, in particular of a combustion engine of a motor vehicle, comprising at least one non-woven filter layer (22) of synthetic individual fibers (23), wherein the filter layer (22) has an increasing filter fineness for the particles to be filtered out along a flow direction (18) of the fluid through the filter layer (22), and wherein the filter layer (22) has a decreasing porosity along the flow direction (18), **characterized in that** a second cellulose-containing and/or glass fiber-containing layer flatly joins the filter layer (22) on the outflow side, the porosity of which filter layer continuously decreases in the flow direction (18) of the fluid through the filter layer (22) and that the filter layer (22), the porosity of which decreases along the flow direction (18), consists of a mixture of individual fibers (23) with diameters of between approximately 50nm and approximately 8µm, with an average diameter of approximately 1µm to approximately 2µm.

2. Filter medium according to claim 1, **characterized in that** the filter layer (22) has a porosity that continuously decreases along the flow direction (18).

3. Filter medium according to any one of the preceding claims, **characterized in that** at least one filter layer (22) consists of a melt blown non-woven fabric.

4. Filter medium according to any one of the preceding claims, **characterized in that** the filter layer (22), the porosity of which decreases along the flow direction (18), consists of one single layer of a mixture of individual fibers (23) with different diameters and/or lengths.

5. Filter medium according to any one of the preceding claims, **characterized in that** the fiber diameter distribution of the individual fibers (23) of the filter layer (22), the porosity of which decreases along the flow direction (18), is constant at least along the flow direction (18).

6. Filter medium according to any one of the preceding claims, **characterized in that** the filter layer (22), the porosity of which decreases along the flow direction (18), consists of continuous fibers.

7. Filter medium according to any one of the preceding claims, **characterized in that** the filter layer (22), the porosity of which decreases along the flow direction (18), is of a uniform material.

8. Filter medium according to any one of the preceding claims, **characterized in that** the individual fibers of the filter layer (22), the porosity of which decreases along the flow direction (18), consist of polyamide, polyester, in particular polybutylene terephthalate, or polypropylene.

9. Filter element (10) for filtration of a fluid, in particular of a liquid fuel, water, engine/motor oil, or air, in particular of a combustion engine of a motor vehicle, comprising a filter medium (12) according to any one of the preceding claims, wherein the filter medium (12) is folded in a zig-zag shape, is cylindrically shaped and circumferentially closed.

## Revendications

1. Matériau filtrant (12) d'un élément filtrant (10) servant à filtrer un fluide, en particulier un carburant liquide, de l'eau, de l'huile moteur ou de l'air, en particulier d'un moteur à combustion d'un véhicule automobile, comportant au moins une couche filtrante non tissée (22) en fibres individuelles synthétiques (23), la couche filtrante (22) présentant une finesse de filtration croissante des particules à filtrer dans un sens de passage (18) du fluide à travers la couche filtrante (22), et la couche filtrante (22) présentant une porosité décroissante dans le sens de passage (18), **caractérisé en ce qu'**à la couche filtrante (22) dont la porosité décroît de façon continue dans le sens de passage (18) du fluide à travers la couche filtrante (22) est ajoutée côté aval, de façon surfacique, une deuxième couche contenant de la cellulose et/ou contenant des fibres de verre, et que la deuxième couche filtrante (22), dont la porosité diminue le long du sens de passage (18), est constituée de fibres individuelles (23) avec des diamètres compris entre environ 50 nm et environ 8 µm, en particulier d'un diamètre moyen d'environ 1 µm à environ 2 µm.

2. Matériau filtrant selon la revendication 1, **caractérisé en ce que** la couche filtrante (22) présente une porosité décroissante de façon continue dans le sens de passage (18).

3. Matériau filtrant selon l'une des revendications précédentes, **caractérisé en ce qu'**au moins une couche filtrante (22) est constituée de non-tissé soufflé à l'état fondu (meltblown).

4. Matériau filtrant selon l'une des revendications précédentes, **caractérisé en ce que** la couche filtrante (22), dont la porosité décroît dans le sens de passage (18), est constituée d'une seule couche d'un mélange de fibres individuelles (23) de diamètres et/ou de longueurs différent(e)s.

5. Matériau filtrant selon l'une des revendications précédentes, **caractérisé en ce que** la distribution des diamètres de fibre des fibres individuelles (23) de la couche filtrante (22), dont la porosité décroît dans le sens de passage (18), est constante au moins dans le sens de passage (18).

6. Matériau filtrant selon l'une des revendications précédentes, **caractérisé en ce que** la couche filtrante (22), dont la porosité décroît dans le sens de passage (18), est constituée de fibres continues.

7. Matériau filtrant selon l'une des revendications précédentes, **caractérisé en ce que** la couche filtrante (22), dont la porosité décroît dans le sens de passage (18), est constituée d'une seule matière.

8. Matériau filtrant selon l'une des revendications précédentes, **caractérisé en ce que** les fibres individuelles de la couche filtrante (22), dont la porosité décroît dans le sens de passage (18), sont constituées de polyamide, de polyester, en particulier de polytéréphtalate de butylène, ou de polypropylène.

9. Élément filtrant (10) servant à filtrer un fluide, en particulier un carburant liquide, de l'eau, de l'huile moteur ou de l'air, en particulier d'un moteur à combustion d'un véhicule automobile, avec un matériau filtrant (12) selon l'une des revendications précédentes, dans lequel le matériau filtrant (12) est plié en zigzag, formé en cylindre et fermé périphériquement.
